# EUROPÄISCHE PATENTSCHRIFT

(11) **EP 1 734 197 B1**
(45) Veröffentlichungstag und Bekanntmachung des Hinweises auf die Patenterteilung: **14.09.2011**
(21) Anmeldenummer: 06012117.5
(22) Anmeldetag: 13.06.2006
(51) Int. Cl.: E04B 1/80, E04B 2/86

(54) **Wandelement mit zwischen zwei Betonfertigteilen angeordneten Vakuumisolierplatte**
Wall element comprising vacuum insulation panel arranged between two prefabricated concrete parts
Elément de paroi avec panneau à vide isolant disposé entre deux éléments préfabriqués en béton

(30) Priorität: 16.06.2005 DE 102005027972
(43) Veröffentlichungstag der Anmeldung: 20.12.2006
(73) Patentinhaber: Variotec GmbH & Co. KG, 92318 Neumarkt i.d. OPf. (DE)
(72) Erfinder: Stölzel, Christof, 92318 Neumarkt/Voggenthal (DE)
(74) Vertreter: Zinnecker, Armin

(56) Entgegenhaltungen:
- EP-A- 0 837 194
- EP-A2- 1 500 752
- EP-A2- 1 544 367
- DE-A1- 19 826 921
- DE-U1- 9 305 488

## Beschreibung

Die Erfindung betrifft ein Wandelement und ein Bauteil, das aus einem erfindungsgemäßen Wandelement, einem weiteren Bauelement, insbesondere einem Wandelement, und einem Dichtungselement besteht.

Das Wandelement umfaßt eine oder mehrere Vakuumisolationsplatten, ein äußeres Betonfertigteil und ein inneres Betonfertigteil, die durch Anker miteinander verbunden sind.

Ein derartiges Wandelement wird in der prioritätsälteren, nicht vorveröffentlichten Europäischen Patentanmeldung EP-A-1 544 367 beschrieben. Es umfaßt eine Vakuumisolationsplatte, die in der genannten Voranmeldung als Verbundwärmedämmplatte bezeichnet wird, und zwei auf beiden Seiten der Vakuumisolationsplatte vorgesehene Betonteile, die unmittelbar an die Vakuumisolationsplatte angrenzen.

Die Vakuumisolationsplatte umfaßt eine oder mehrere Vakuumdämmplatten aus einem evakuierbaren, porösen Material geringer Wärmeleitfähigkeit und eine vakuumdichte Umhüllung, insbesondere eine gasdichte und diffusionsdichte Umhüllung. Besonders geeignet sind Folien aus Kunststoff, Folien aus Metall, insbesondere aus Aluminium, oder Folien aus Kunststoff und Metall, insbesondere eine metallisierte Hochbarrierefolie aus Kunststoff. Die Vakuumdämmplatten bilden den Kern der Vakuumisolationsplatte. Als Material für die Vakuumdämmplatten sind insbesondere mikroporöse Kieselsäurepulver oder offenporige Schäume aus Polyurethan oder Polystyrol geeignet. Bei mikroporösen Kernen genügt aufgrund ihrer extrem kleinen Porengröße von weniger als einem halben Mikrometer ein Vakuum von etwa 1 bis 10 mbar. Bei offenporigen Schäumen ist es dagegen vorteilhaft oder erforderlich, daß die Gasdrücke aufgrund der gröberen Poren im Bereich von 0,1 bis 1 mbar liegen.

Wenn mehrere Vakuumdämmplatten von einer Umhüllung umgeben sind, liegen diese Vakuumdämmplatten vorzugsweise nebeneinander. Vorteilhaft ist es, die in der Europäischen Patentanmeldung EP-A-1 544 367 beschriebenen Merkmale vorzusehen. Die eine oder mehreren Vakuumdämmplatten können beidseitig von Kunststoffschaum, vorzugsweise von Polyurethanschaum, umgeben sein. Vorzugsweise ist der Kunststoffschaum bzw. Polyurethanschaum von der vakuumdichten Umhüllung abgedeckt.

Die vakuumdichte Umhüllung ist vorzugsweise von mindestens einer weiteren Platte abgedeckt, die aus Kunststoffschaum, vorzugsweise aus Polyurethanschaum, vorzugsweise aus gepresstem Polyurethanschaum, aber auch aus einem anderen Werkstoff mit niedriger Wärmeleitfähigkeit bestehen kann. Die weitere Platte ist vorzugsweise auf die Umhüllung bzw. auf die Aluminiumfolie aufgeklebt.

Nach einer weiteren vorteilhaften Weiterbildung sind die Außenkanten der Vakuumdämmplatten von einem druckstabilen Konstruktionsschaum umgeben. Der druckstabile Konstruktionsschaum umgibt vorzugsweise den gesamten umlaufenden Rand der Vakuumdämmplatten. Er weist vorzugsweise die gleiche Stärke auf wie die Vakuumdämmplatten. Vorzugsweise besteht der druckstabile Konstruktionsschaum aus Polyurethan. Zur Herstellung dieser vorteilhaften Weiterbildung kann der druckstabile Konstruktionsschaum vor dem beidseitigen Umschäumen mit Kunststoffschaum im Kantenbereich der Vakuumdämmplatten in vorzugsweise gleicher Stärke als Abstandshalter eingelegt werden.

Eine weitere vorteilhafte Weiterbildung ist dadurch gekennzeichnet, daß die Außenkanten der Vakuumdämmplatten bzw. des druckstabilen Konstruktionsschaums von einer Hochbarrierefolie umgeben sind. Die Hochbarrierefolie wirkt vorzugsweise als Diffusionssperrschicht, die eine Permeation von Gas und Wasserdampf in die Vakuumdämmplatten verhindert. Sie ist vorzugsweise gasdicht und diffusionsdicht. Die Hochbarrierefolie ist vorzugsweise aus Kunststoff, vorzugsweise aus Butyl. Sie kann allerdings auch aus einem beschichteten Gewebe bestehen, insbesondere aus einem mit Butyl oder einem anderen geeigneten Kunststoff beschichteten Gewebe. Vorteilhaft ist es, wenn die Hochbarrierefolie U-förmig ausgestaltet ist.

Vorteilhaft ist es, wenn die Hochbarrierefolie an der vakuumdichten Umhüllung anliegt. Die Hochbarrierefolie ist vorzugsweise mit der Umhüllung verklebt. Vorteilhaft ist es, wenn die Hochbarrierefolie U-förmig ist und die Schenkel der Hochbarrierefolie an der Umhüllung anliegen bzw. mit der Umhüllung verklebt sind.

Zur Herstellung dieser vorteilhaften Weiterbildung kann um die Außenkanten der Vakuumdämmplatten bzw. des druckstabilen Konstruktionsschaums eine vorzugsweise U-förmige Hochbarrierefolie herumgelegt werden. Die Schenkel der Hochbarrierefolie können mit der vakuumdichten Umhüllung verklebt werden, so daß der Innenraum gut gegen eindringende Gase und Feuchtigkeit geschützt ist.

Nach einer weiteren vorteilhaften Weiterbildung sind die Außenkanten der Vakuumdämmplatten von einem vorkomprimierten Fugendichtband (Compriband) umgeben, das seinerseits von einer Hochbarrierefolie umgeben ist, insbesondere von einem Butylband.

An oder in einer oder mehreren oder allen Vakuumdämmplatten kann ein Sensor zur Überprüfung des Gasdrucks angebracht sein. Der Sensor kann über elektrische Zuleitungen ausgelesen werden.

Eine oder mehrere oder alle Vakuumdämmplatten können Aussparungen aufweisen, in die Anker eingesetzt werden oder sind. Die Aussparungen können sich in der Mitte und/oder an den Rändern der Vakuumdämmplatten befinden. Zur Herstellung dieser vorteilhaften Weiterbildung können an Stellen, an denen Aussparungen in den Vakuumdämmplatten vorhanden sind, durch die Vakuumisolationsplatte hindurch Löcher gefräst und dort Anker eingesetzt werden. Die Anker sind vorzugsweise aus einem Material mit niedriger Wärmeleitung und/oder hoher mechanischen Festigkeit hergestellt, vorzugsweise aus Kohlefaser, Glasfaser oder vergleichbaren Werkstoffen wie beispielsweise Wood Composites Plastic. Besonders geeignet sind GFK-Werkstoffe und kohlefaserverstärkter Kunststoff.

Zur Herstellung des Wandelements kann die Vakuumisolationsplatte auf eine Betonplatte, insbesondere auf eine frisch gegossene Betonplatte, gesetzt werden. Die andere Seite der Vakuumisolationsplatte kann ebenfalls mit Beton ausgefüllt werden, vorzugsweise in einer Betonschalung. Die Anker können dabei eine innige Verbindung mit der Betonplatte und/oder dem Beton und/oder der Betonschalung eingehen. Wenn die Vakuumisolationsplatte mit ihrer unteren Seite auf die vorzugsweise frisch gegossene Betonplatte gesetzt wird, wird ihre obere Seite in der beschriebenen Weise vorzugsweise in einer Betonschalung mit Beton ausgefüllt.

Eine weitere vorteilhafte Weiterbildung ist dadurch gekennzeichnet, daß die Vakuumisolationsplatte mit einer Innenplatte und mit einer Außenplatte aus Beton verbunden ist. Die Verbindung der Vakuumisolationsplatte mit der Innenplatte und/oder der Außenplatte erfolgt vorzugsweise durch Verkleben. Die Innenplatte und/oder die Außenplatte sind mit der Vakuumisolationsplatte über die aus der Vakuumisolationsplatte herausstehenden Anker verbunden.

Aus der DE 198 26 921 A1 ist ein Wandelement für Häuser mit einer Außenschale aus Beton, einer Innenschale aus Beton, einer zwischenliegenden Wärmedämmschicht und einer Verbindungsstruktur aus Metall bekannt, wobei die Verbindungsstruktur aus Metall die Außenschale und die Innenschale miteinander statisch verbindet. Die Außenschale ist als Wärmeabsorber ausgebildet, der von Kühlrohren eines Kühlmittelkreislaufs durchzogen ist. Die Innenschale ist als Flächenheizkörper ausgebildet, der von Heizrohren eines Heizmittelkreislaufs durchzogen ist. Der Kühlmittelkreislauf und der Heizmittelkreislauf sind durch einen Wärmepumpe miteinander wärmegekoppelt.

Die EP-A2-1 500 752 offenbart ein Dämmelement zum Bereitstellen einer Dämmwirkung in einer Dämmrichtung mit einem Vakuum-Isolier-Paneel und mindestens einer Dämmplatte. Um eine Wärmedämmung ohne optische Beeinträchtigung der Fassade zu ermöglichen ist in einem Rand der Dämmplatte eine sich quer erstreckende Profilierung zur Aufnahme eines Befestigungselementes gebildet, und zwar derart, daß eine Projektion der Profilierung längs der Dämmrichtung zumindest abschnittweise auf einen Rand des Vakuum-Isolier-Paneels fällt.

Aufgabe der Erfindung ist es, ein Wandelement der eingangs angegebenen Art zu verbessern.

Erfindungsgemäß wird diese Aufgabe dadurch gelöst, daß ein Betonfertigteil von der Vakuumisolationsplatte beabstandet ist und daß dieses Betonfertigteil kürzer ist als das andere Betonfertigteil, derart, daß beim Zusammenbau mit einem weiteren Bauelement ein Dichtungselement einbringbar ist. Das von der Vakuumisolationsplatte beabstandete Betonfertigteil ist um ein solches Maß kürzer als das andere Betonfertigteil, daß eine Lücke zum Einbringen eines Dichtungselements entsteht.

Das weitere Bauelement umfaßt vorzugsweise eine Vakuumisolationsplatte.

Bei dem weiteren Bauelement kann es sich um ein Wandelement handeln, insbesondere um ein Wandelement, das eine Vakuumisolationsplatte und ein Betonteil, insbesondere ein Betonfertigteil, umfaßt. Das weitere Bauelement kann aus einem Wandelement bestehen, das eine Vakuumisolationsplatte, ein äußeres Betonfertigteil und ein inneres Betonfertigteil umfaßt. Die beiden Betonfertigteile können unmittelbar an die Vakuumisolationsplatte angrenzen. Es ist allerdings auch möglich, daß ein Betonfertigteil von der Vakuumisolationsplatte beabstandet ist. Vorzugsweise sind die Vakuumisolationsplatte und das oder die Betonfertigteile durch Anker miteinander verbunden.

Bei dem weiteren Bauelement kann es sich allerdings auch um ein weiteres Betonfertigteil, insbesondere um eine Innenwand, oder um ein sonstiges Bauelement handeln.

Das weitere Bauelement verläuft vorzugsweise im wesentlichen rechtwinklig zu dem Wandelement.

In bestimmten Anwendungsfällen ist es wünschenswert oder erforderlich, in dem Bereich, in dem das Wandelement an ein weiteres Bauelement angrenzt, ein Dichtungselement vorzusehen. Dies ist insbesondere in demjenigen Bereich wünschenswert oder erforderlich, in dem die Vakuumisolationsplatte des Wandelements an die Vakuumisolationsplatte des weiteren Bauelements angrenzt. Dadurch, daß das von der Vakuumisolationsplatte beabstandete Betonfertigteil des Wandelements in der beschriebenen Weise kürzer ist als das andere Betonfertigteil, wird eine Lücke geschaffen, durch die das Dichtungselement eingebracht und positioniert werden kann. Anschließend kann in den freien Raum zwischen der Vakuumisolationsplatte des Wandelements und dem von der Vakuumisolationsplatte beabstandeten Betonfertigteil Ortbeton eingebracht werden, um diesen Raum zu füllen und die Wand herzustellen. Dabei kann auch die erwähnte Lücke durch Ortbeton geschlossen werden.

Es ist möglich, daß beide Betonfertigteile von der Vakuumisolationsplatte beabstandet sind. In den meisten Fällen ist es allerdings vorteilhaft, wenn nur eines der beiden Betonfertigteile von der Vakuumisolationsplatte beabstandet ist.

Vorteilhaft ist es, wenn das innere Betonfertigteil von der Vakuumisolationsplatte beabstandet ist. Dabei ist es vorteilhaft, wenn in diesem Fall das äußere Betonfertigteil nicht von der Vakuumisolationsplatte beabstandet ist.

Die Erfindung betrifft ferner ein Bauteil, bestehend aus einem erfindungsgemäßen Wandelement, einem weiteren Bauelement und einem Dichtungselement. Bei dem weiteren Bauelement kann es sich um ein Wandelement, insbesondere um ein erfindungsgemäßes Wandelement handeln. Es kann sich allerdings auch um eine Innenwand oder um ein sonstiges Bauelement handeln.

Insbesondere handelt es sich bei dem weiteren Bauelement um ein Wandelement, das eine Vakuumisolationsplatte, ein äußeres Betonfertigteil und ein inneres Betonfertigteil umfaßt.

Ausführungsbeispiele der Erfindung werden nachstehend anhand der beigefügten Zeichnung im einzelnen erläutert. In der Zeichnung zeigt
- Fig. 1: ein Wandelement, ein weiteres Wandelement und ein Dichtungselement in einer seitlichen Schnittansicht,
- Fig. 2: das Bauteil gemäß Fig. 1 nach dem Einbringen von Ortbeton,
- Fig. 3: ein Wandelement, ein weiteres Wandelement, eine Innenwand und ein Dichtungselement in einer seitlichen Schnittansicht,
- Fig. 4: das Bauteil gemäß Fig. 3 nach dem Einbringen von Ortbeton,
- Fig. 5: den Randbereich einer Vakuumisolationsplatte in einer seitlichen Schnittansicht und
- Fig. 6: zwei nebeneinanderliegende Vakuumisolationsplatten in einer Teilansicht von vorne.

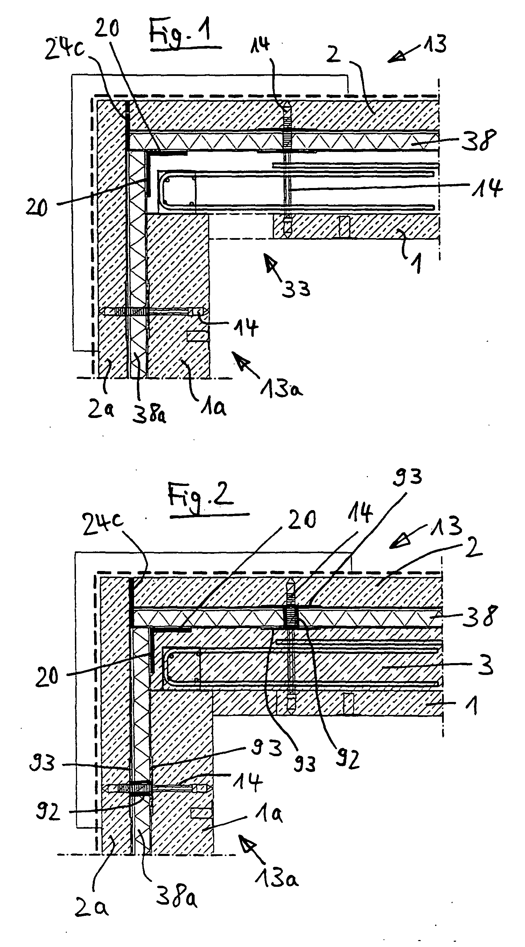

Das in Fig. 1 gezeigte Wandelement 13 umfaßt eine Vakuumisolationsplatte (VIP) 38, ein äußeres Betonfertigteil 2 und ein inneres Betonfertigteil 1, die durch Anker 14, nämlich GFK-Anker, miteinander verbunden sind. Das innere Betonfertigteil 1 ist von der Vakuumisolationsplatte 38 beabstandet. Bei der Herstellung der Wand wird der Zwischenraum zwischen der Vakuumisolationsplatte 38 und dem inneren Betonfertigteil 1 durch Ortbeton 3 gefüllt.

Die Anker 14 sind vorzugsweise aus einem Material mit einer geringen Wärmeleitfähigkeit und/oder mit einer hohen mechanischen Festigkeit hergestellt. Besonders geeignet sind GFK-Werkstoffe und kohlefaserverstärkter Kunststoff. Die Anker 14 können von jeweils einer Hülse 92 umgeben sein. Ferner können im Bereich der Anker 14 beidseits der Vakuumisolationsplatten 38 Abdeckscheiben 93 vorgesehen sein, die eine mittige Öffnung zum Durchtritt eines Ankers 14 aufweisen, die sich an die Enden der Hülsen 92 nach außen anschließen und die die an die Hülsen 92 anschließenden Bereiche der Vakuumisolationsplatten 38 abdecken. Die Hülsen 92 und/oder die Abdeckscheiben 93 dienen zur Wärmeisolation der Anker 14. Sie tragen dazu bei, daß die Anker 14 keine Wärmebrücken bilden.

Das innere Betonfertigteil 1 ist kürzer als das äußere Betonfertigteil 2. Die Vakuumisolationsplatte 38 ist genauso lang wie das äußere Betonfertigteil 2. Die Endflächen des äußeren Betonfertigteils 2 und der Vakuumisolationsplatte 38 fluchten also miteinander.

Das in Fig. 1 gezeigte Wandelement 13 soll mit einem weiteren Wandelement 13a zu einer rechtwinkligen Ecke zusammengebaut werden. Das weitere Wandelement 13a umfaßt eine Vakuumisolationsplatte 38a, ein äußeres Betonfertigteil 2a und ein inneres Betonfertigteil 1a, die durch Anker 14 miteinander verbunden sind. Sowohl das äußere Betonfertigteil 2 als auch das innere Betonfertigteil 1 liegen unmittelbar an der Vakuumisolationsplatte 38 an. Die Stärke des äußeren Betonfertigteils 2a des weiteren Wandelements 13a stimmt mit der Stärke des äußeren Betonfertigteils 2 des Wandelements 13 überein. Die Stärke des inneren Betonfertigteils 1a des weiteren Wandelements 13a ist größer, und zwar um das zwei- bis dreifache größer, als die Stärke des inneren Betonfertigteils 1 des Wandelements 13.

Das äußere Betonfertigteil 2a des weiteren Bauelements 13a überragt das äußere Ende der Vakuumisolationsplatte 38a um das Maß der Stärke des äußeren Betonfertigteils 2 und der Vakuumisolationsplatte 38 des Wandelements 13, so daß die miteinander fluchtenden Endflächen des äußeren Betonfertigteils 2 und der Vakuumisolationsplatte 38 an dem überragenden Teil des äußeren Betonfertigteils 2a anliegen. Die Stirnflächen des äußeren Betonfertigteils 2 und der Vakuumisolationsplatte 38 sind gegen die überragende Seitenfläche des äußeren Betonfertigteils 2a durch ein Compriband 24c abgedichtet.

Die Vakuumisolationsplatte 38a überragt das innere Betonfertigteil 1 a des weiteren Wandelements 13a um das Maß des Abstandes zwischen der Vakuumisolationsplatte 38 und dem inneren Betonfertigteil 1 des Wandelements 13. Die äußere Stirnfläche der Vakuumisolationsplatte 38a liegt an einer Seitenfläche der Vakuumisolationsplatte 38 an, wobei die Außenfläche der Vakuumisolationsplatte 38a mit der Stirnfläche der Vakuumisolationsplatte 38 fluchtet. Der Eckbereich der Vakuumisolationsplatten 38, 38a ist durch ein Dichtungselement 20 abgedichtet. Das Dichtungselement 20 besteht aus diffusionsdichten Dichtungsbändern.

Damit das Dichtungselement 20 an der Fig. 1 gezeigten Stelle positioniert werden kann, ist das innere Betonfertigteil 1 des Wandelements 13 kürzer als das äußere Betonfertigteil 2, derart, daß beim Zusammenbau mit dem weiteren Wandelement 13a das Dichtungselement 20 einbringbar ist. Das von der Vakuumisolationsplatte 38 beabstandete innere Betonfertigteil 1 ist um ein solches Maß kürzer als das äußere Betonfertigteil 2, daß eine Lücke 33 entsteht, durch die hindurch das Dichtungselement 20 einbringbar ist. Der Abstand zwischen der äußeren Stirnfläche des inneren Betonfertigteils 1 von der Stirnfläche des äußeren Betonfertigteils 2 ist größer als die kombinierte Stärke der Vakuumisolationsplatte 38a und des inneren Betonfertigteils 1 a.

Bei der Herstellung der in Fig. 2 gezeigten Ecke werden der Zwischenraum zwischen der Vakuumisolationsplatte 38 und dem inneren Betonfertigteil 1 sowie die Lücke 33 mit Ortbeton 3 gefüllt.

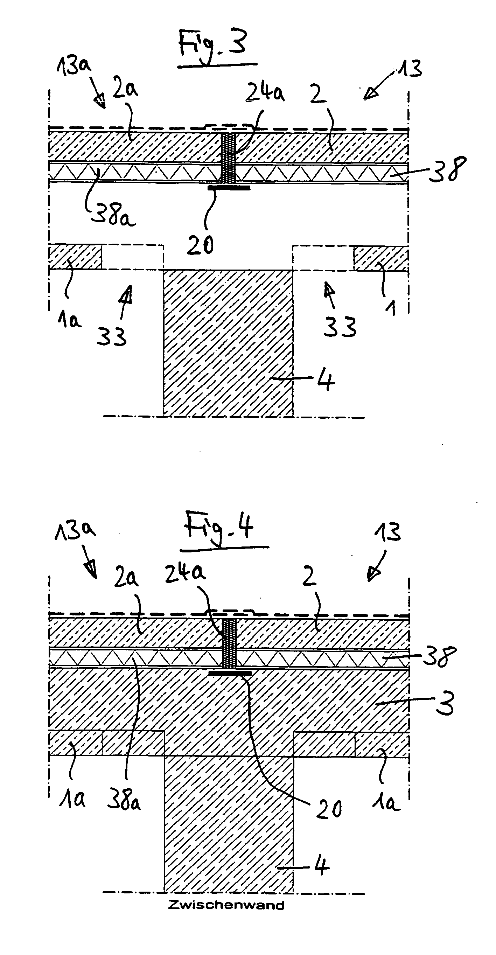

Das in Fig. 3 gezeigte Bauteil besteht aus dem in Fig. 1 und 2 gezeigten Wandelement 13 und einem weiteren Wandelement 13a, das zu dem Wandelement 13 symmetrisch ausgebildet ist, sowie einer Innenwand 4. Die Innenwand 4 ist als Betonfertigteil ausgebildet.

Zwischen den Stirnflächen der äußeren Betonfertigteile 2, 2a und der Vakuumisolationsplatten 38, 38a sind Compribänder 24a zum Verschließen der Fuge vorgesehen. Die unteren Enden der Compribänder 24a fluchten mit den unteren Endflächen der Vakuumisolationsplatten 38, 38a. Sie sind durch ein Dichtungselement 20 abgedeckt, das durch ein diffusionsoffenes Dichtungsband gebildet wird. Das Dichtungselement 20 kann durch eine der Lücken 33 hindurch positioniert werden. Danach werden die Lücken 33 und der Zwischenraum zwischen den inneren Betonfertigteilen 1, 1 a und den Vakuumisolationsplatten 38, 38a durch Ortbeton 3 gefüllt.

Bei den Compribändern 24, 24a handelt es sich vorzugsweise um vorkomprimierte Fugendichtbänder aus offenzelligem Kunststoffschaum, insbesondere Polyurethan-Weichschaum, mit Polymerimprägnat oder mit einem Imprägnat auf Acrylatbasis.

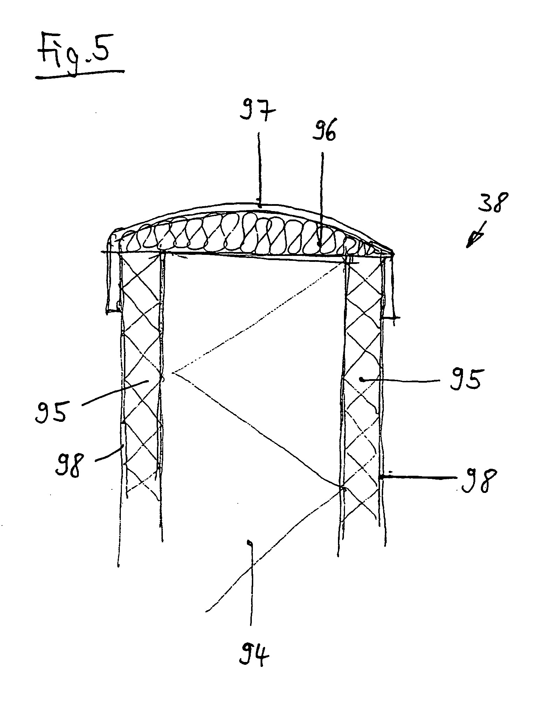

Fig. 5 zeigt den Randbereich einer Vakuumisolationsplatte 38, die eine Vakuumdämmplatte 94 umfaßt, die auf beiden Seiten von jeweils einer Platte 95 aus Polyurethanschaum oder aus massivem Polyurethan umgeben ist. Die Außenseiten der Platten 95 sind von einer diffusionsdichten und gasdichten Umhüllung 98 abgedeckt. Die Außenkanten der Vakuumdämmplatte 94 sind von einem Compriband 96 umgeben, das seinerseits von einem Butylband 97 umgeben ist. Das Butylband 97 übergreift das Compriband 96 und die äußeren Enden der Platten 95 einschließlich der Umhüllungen 98, mit denen es verbunden, insbesondere verklebt, ist. Das Compriband 96 ist gewölbt. Seine Stärke nimmt von der Mitte nach außen hin ab. Wenn benachbarte Vakuumisolationsplatten 38, 38' aneinandergelegt werden, werden die zugehörigen Compribänder 96 zusammengedrückt, wodurch ein Fugendichtschluß nebeneinanderliegender Vakuumisolationsplatten 38, 38' gewährleistet werden kann.

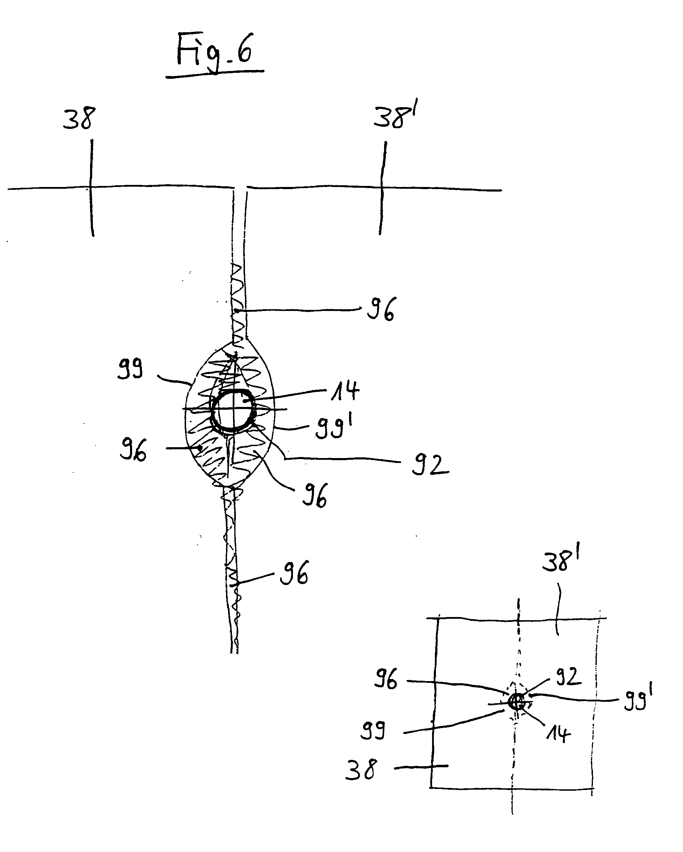

In Fig. 6 sind Teilbereiche von zwei nebeneinanderliegenden Vakuumisolationsplatten 38, 38' dargestellt. Im Bereich der Ankerdurchführung, also im Bereich einer Hülse 92 für einen Anker 14, weisen die Vakuumisolationsplatten 38, 38' jeweils Aussparungen 99, 99' auf, die einander gegenüberliegen. Der Bereich zwischen den Aussparungen 99, 99' und der Hülse 92 wird ebenfalls durch die Compribänder 96 gefüllt.

## Patentansprüche

1. Wandelement, umfassend eine Vakuumisolationsplatte (38), ein äußeres Betonfertigteil (2) und ein inneres Betonfertigteil (1), die durch Anker (14) miteinander verbunden sind,
**dadurch gekennzeichnet,**
**daß** ein Betonfertigteil (1) von der Vakuumisolationsplatte (38) beabstandet ist und daß dieses Betonfertigteil (1) kürzer ist als das andere Betonfertigteil (2), derart, daß bei Zusammenbau mit einem weiteren Bauelement (13a, 4) ein Dichtungselement (20) einbringbar ist.

2. Bauteil, bestehend aus einem Wandelement nach Anspruch 1, einem weiteren Bauelement (13a, 4), insbesondere einem weiteren Wandelement (13a), und einem Dichtungselement (20).

3. Bauteil nach Anspruch 2, **dadurch gekennzeichnet, daß** das weitere Wandelement (13a) eine Vakuumisolationsplatte (38a), ein äußeres Betonfertigteil (2a) und ein inneres Betonfertigteil (1a) umfaßt.

## Claims

1. A wall element comprising a vacuum insulation board (38), an outer prefabricated concrete part (2) and an inner prefabricated concrete part (1) which are connected to one another by ties (14),
**characterised in that**
one prefabricated concrete part (1) is spaced apart from the vacuum insulation board (38); and **in that** this prefabricated concrete part (1) is shorter than the other prefabricated concrete part (2) such that, on assembly with a further structural element (13a, 4), a sealing element (20) can be introduced.

2. A component comprising a wall element in accordance with claim 1, a further structural element (13a, 4), in particular a further wall element (13a), and a sealing element (20).

3. A component in accordance with claim 2, **characterised in that** the further wall element (13a) includes a vacuum insulation plate (38a), an outer prefabricated concrete part (2a) and an inner prefabricated concrete part (1 a).

## Revendications

1. Panneau préfabriqué comprenant une plaque isolante à vide (38), un élément préfabriqué extérieur en béton (2) et un élément préfabriqué intérieur en béton (1), qui sont reliés entre eux par un tirant (14),
**caractérisé en ce que**
un élément préfabriqué en béton (1) est écarté de la plaque isolante à vide (38) et **en ce que** cet élément préfabriqué en béton (1) est plus court que l'autre élément préfabriqué en béton (2), de sorte que lors de l'assemblage avec un autre élément de construction (13a, 4), un élément d'étanchéité (20) est introduisible.

2. Élément de structure se composant d'un panneau préfabriqué selon la revendication 1, d'un autre élément de construction (13a, 4), notamment d'un autre panneau préfabriqué (13a), et d'un élément d'étanchéité (20).

3. Élément de structure selon la revendication 2 **caractérisé en ce que** l'autre panneau préfabriqué (13a) comprend une plaque isolante à vide (38a), un élément préfabriqué extérieur en béton (2a) et un élément préfabriqué intérieur en béton (1 a).
